# EUROPÄISCHE PATENTSCHRIFT

(11) **EP 3 297 788 B1**
(45) Veröffentlichungstag und Bekanntmachung des Hinweises auf die Patenterteilung: **27.02.2019**
(21) Anmeldenummer: 16738051.8
(22) Anmeldetag: 20.05.2016
(51) Int. Cl.: B23K 35/02, F16G 3/10, F16G 1/20, F16G 5/16, B65G 15/48, B21B 3/02

(54) **VERFAHREN ZUR HERSTELLUNG EINES ENDLOSBANDES MIT ZUMINDEST EINER SCHWEISSNAHT**
METHOD FOR PRODUCING AN ENDLESS BELT COMPRISING AT LEAST ONE WELD SEAM
PROCÉDÉ DE FABRICATION D'UNE COURROIE SANS FIN POURVUE D'AU MOINS UN CORDON DE SOUDURE

(30) Priorität: 22.05.2015 AT 504182015
(43) Veröffentlichungstag der Anmeldung: 28.03.2018
(73) Patentinhaber: Berndorf Band GmbH, 2560 Berndorf (AT)
(72) Erfinder: RESTER, Martin, 2345 Brunn am Gebirge (AT)
(74) Vertreter: Burger, Hannes
(86) Internationale Anmeldenummer: PCT/AT2016/050150
(87) Internationale Veröffentlichungsnummer: WO 2016/187630

(56) Entgegenhaltungen:
- WO-A1-2014/134639
- WO-A1-2014/183145
- WO-A1-2015/027263
- KR-A- 20080 105 250

## Beschreibung

Die Erfindung betrifft ein Verfahren zur Herstellung eines Endlosbandes welches zumindest eine Schweißnaht aufweist.

Bei der Herstellung von Filmen, insbesondere Triacetatfilmen, welche beispielsweise für die Produktion von LCD-Bildschirmen verwendet werden, kommen Endlosbänder zum Einsatz, auf die derartige Filme aufgetragen werden. Die Herstellung größerer Bildschirme macht auch die Verwendung breiterer Endlosbänder erforderlich. Auch hinsichtlich der Produktivitätserhöhung bei der Herstellung von Filmmaterial ist es von Vorteil, breitere Bänder zu verwenden. Da die Bandbreiten der für die Herstellung von Endlosbändern verwendeten Rohbänder üblicherweise bei ca. 2 m liegen, werden zur Erzielung größerer Bandbreiten zwei oder mehrere Rohbänder an ihren längsseitigen Kanten miteinander verschweißt. Die Schweißnähte unterscheiden sich herstellungsbedingt hinsichtlich ihres strukturellen Aufbaus von dem restlichen Bandkörper. Daraus ergeben sich auch unterschiedliche Wärmeleitfähigkeiten für die Schweißnähte und den restlichen Bandkörper des Endlosbandes, wobei sich herausgestellt hat, dass die Wärmeleitfähigkeit der Schweißnähte höher ist als die Wärmeleitfähigkeit des restlichen Endlosbandes.

Endlosbänder sind beispielsweise aus der WO2014/134639A1 sowie der WO2015/027263A1 bekannt geworden. Die WO2014/183145A1 zeigt darüber hinaus eine Vorrichtung zum Filmgießen, welche ein Endlosband aufweist. Aus der KR20080105250A ist ein Schweißverfahren bekannt geworden, bei welchem Nanopartikel in ein Schweißbad eingebracht werden, um die Wärmeleitfähigkeit zu reduzieren.

Bei der Herstellung von Filmen ist es üblich, das Ausgangsprodukt auf ein Endlosband aufzugießen, teilweise zu trocknen und von dem Endlosband wieder abzuziehen. Zum Trocknen des Filmes wird zumindest eine, einer den Film tragenden Produktseite gegenüberliegende Innenseite des Endlosbandes, beispielsweise mittels Heißluft und/oder mittels mindestens einer beheizten Umlenkrolle, erwärmt. Aufgrund der erhöhten Wärmeleitfähigkeiten der Schweißnähte im Vergleich zu dem restlichen Endlosband kommt es zu einem schnelleren Trocknen des Filmes im Bereich der Schweißnähte, was ein Erhöhung der Oberflächenspannung in den schneller trocknenden Bereichen des Filmes zur Folge hat. Was wiederum eine Migration von Filmpartikel in Richtung der Schweißnähte und die Entstehung lokaler Verdickungen des Films im Bereich der Schweißnähte bewirkt. Dies hat jedoch den Nachteil, dass die Schweißnähte in dem fertigen Produkt als Abdruck sichtbar sind. Derartige Abdrücke sind jedoch unerwünscht und mindern die Qualität des Filmes.

Es ist daher eine Aufgabe der Erfindung, den oben genannten Nachteil zu überwinden und einen qualitativ hochwertigen Film herzustellen.

Diese Aufgabe wird mit einem Verfahren der eingangs genannten Art erfindungsgemäß durch die Merkmale des kennzeichnenden Teils von Anspruch 1 gelöst.

Die erfindungsgemäße Lösung ermöglicht es, die Unterschiede der Wärmeleitfähigkeiten einer Schweißnaht und der angrenzenden Bereiche des Endlosbandes zu reduzieren bzw. Unterschiede in den Wärmeflüssen durch die Schweißnaht und den daran angrenzenden Bereichen des Endlosbandes zu minimieren.

Gemäß einer vorteilhaften Variante der Erfindung kann es vorgesehen sein, dass das in die Schweißnaht eingebrachte Material Bestandteil einer Legierung eines Grundmaterials eines Bandkörpers des Endlosbandes ist.

Alternativ ist es jedoch auch möglich, dass das in die Schweißnaht eingebrachte Material nicht Bestandteil einer Legierung eines Grundmaterials eines Bandkörpers des Endlosbandes ist.

Die Vertiefung kann hierbei durch mechanisches oder chemisches oder elektrochemisches Abtragen von Material erfolgen oder auch ein Resultat des Schweißprozesses sein.

Als besonders vorteilhaft hat sich herausgestellt, wenn das Material mittels eines galvanischen Verfahrens, insbesondere mittels Tampongalvanisierens, aufgebracht wird.

Eine weitere sehr effiziente Methode zur Verringerung des Unterschieds der Wärmeflüsse durch die Schweißnaht und einem daran angrenzenden Bereich kann dadurch erzielt werden, dass der an die Schweißnaht angrenzende Bereich durch Aufbringen weiterer Schweißnähte umgeformt wird, wobei unmittelbar benachbarte Schweißnähte einander zumindest teilweise überlappen.

Als besonders günstig hat es sich herausgestellt, wenn eine Eidringtiefe der weiteren Schweißnähte in das Grundmaterial des Endlosbandes mit zunehmender Entfernung der weiteren Schweißnähte von der zumindest einen Schweißnaht abnimmt.

Gemäß einer vorteilhaften Weiterbildung der Erfindung kann es vorgesehen sein, dass die Dicke der zumindest einen Schweißnaht in Richtung einer Dicke des Endlosbandes durch Abtragen von Material reduziert wird und eine durch das Abtragen entstandene Vertiefung mit einem Material aufgefüllt wird, welches eine niedrigere Wärmeleitfähigkeit als die Schweißnaht aufweist. Diese Variante der Erfindung ermöglicht es, den Wärmefluss in einem Bereich der Schweißnaht sehr gut einstellen zu können, da dieser je nach Art des verwendeten Materials verändert werden kann. Als Materialien können beispielsweise thermisch schlecht leitende Kunststoffe zum Einsatz kommen.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung eines erfindungsgemäßen Endlosbandes;
- Fig. 2: einen Schnitt durch eine erste Variante eines erfindungsgemäßen Endlosbandes;
- Fig. 3: einen Schnitt durch eine zweite Variante eines erfindungsgemäßen Endlosbandes;
- Fig. 4: einen Schnitt durch eine dritte Variante eines erfindungsgemäßen Endlosbandes;
- Fig. 5: einen Schnitt durch eine vierte Variante eines erfindungsgemäßen Endlosbandes;
- Fig. 6: eine erfindungsgemäße Vorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

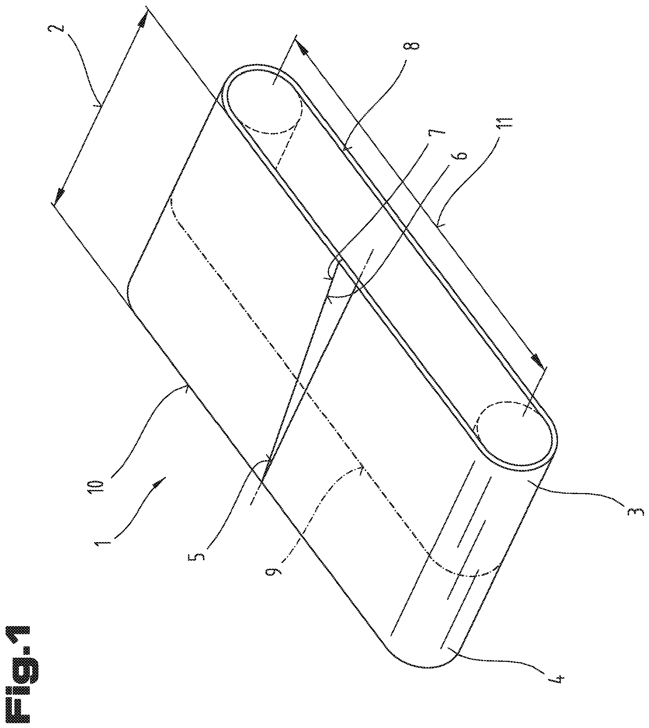

In Fig. 1 ist schematisch vereinfacht ein Endlosband 1, insbesondere ein endloses Stahlband, gezeigt, welches eine Gesamtbreite 2 quer zu seiner Längserstreckung aufweist.

Um die gewünschte Gesamtbreite 2 zu erzielen, wird das Endlosband 1 in Richtung seiner Längserstreckung bevorzugt aus mehreren nebeneinander angeordneten Bandabschnitten 3, 4 gebildet. Dabei werden die Bandabschnitte 3, 4 an Längsseitenkanten miteinander verschweißt Dies erfolgt durch eine vereinfacht dargestellte als Längsschweißnaht bezeichnete Schweißnaht 9. Die Bandabschnitte 3, 4 werden aus vorgefertigten Blechabschnitten gebildet, wobei vor dem Verschweißen die Längsseitenkanten einem je nach gewähltem Schweißverfahren geeigneten Vorbereitungsverfahren unterzogen werden.

Weiters kann zur Herstellung des Endlosbandes1 dieses an einander zugewendeten Stirnenden 5, 6 mit einer als Querschweißnaht bezeichneten Schweißnaht 7 verbunden werden.

Dabei wird meist so vorgegangen, dass zuerst die beiden Bandabschnitte 3, 4 in deren Längserstreckung miteinander verschweißt werden und anschließend die Querschweißnaht 7 ausgebildet wird. Bei dem hier gezeigten Ausführungsbeispiel ist die Querschweißnaht 7 unter einem vorbestimmten Winkel bezüglich außenliegender Längsseitenkanten 8, 10 des Endlosbandes 1 verlaufend angeordnet. Es wäre aber auch möglich, eine rechtwinkelige Ausrichtung der Querschweißnaht 7 bezüglich der Längsseitenkanten 8, 10 zu wählen.

In Abhängigkeit von der Bandstärke des Endlosbandes 1 und des dabei verwendeten Werkstoffes ist der Radius der Umlenkung des Endlosbandes 1 entsprechend darauf abzustimmen. Dabei ergibt sich bei einem geradlinig verlaufenden Bandverlauf des Endlosbandes 1 zwischen voneinander distanzieren Umlenkstellen ein Abstand 11 zwischen diesen. Sind weitere Umlenkungen des Endlosbandes 1 vorgesehen, verkürzt sich der Abstand 11 dementsprechend.

Die beiden Bandabschnitte 3, 4 können mit einer annähernd gleichen Breite ausgebildet sein. In Summe gesehen ergibt sich die Gesamtbreite 2 des Endlosbandes 1 durch die Bandbreiten der Bandabschnitte 3, 4. Zum Verbinden der Bandabschnitte 3, 4 werden die miteinander zu verbindenden Längsseitenkanten stirnseitig aneinanderstoßend angeordnet und in dieser Stellung miteinander verschweißt. Das Verschweißen kann beispielsweise mit oder ohne Schutzgas, mittels Laserschweißen, WIG Schweißen, Plasmaschweißen, MIG/MAG Schweißen, Ultraschall- oder Reibrührschweißen erfolgen.

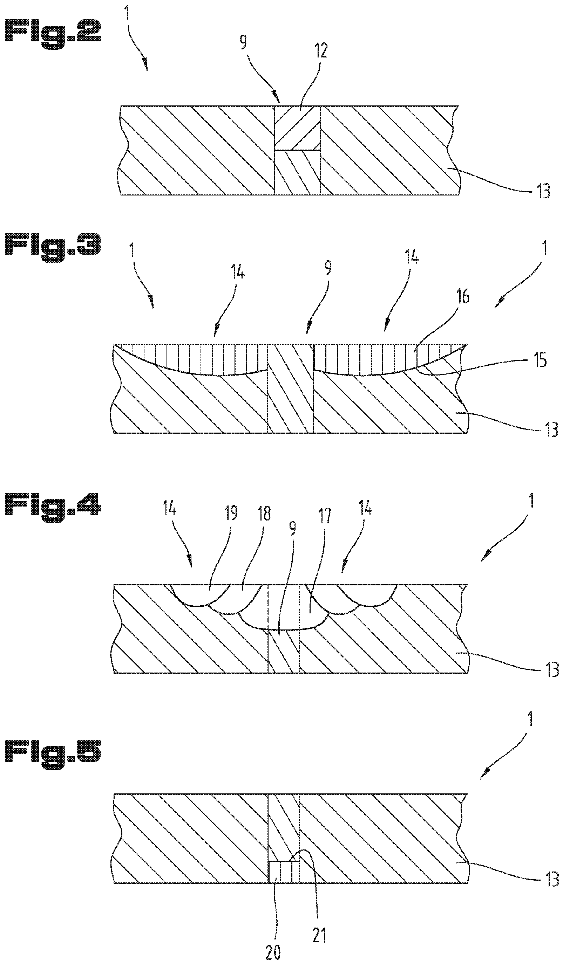

Gemäß Fig. 2 kann während der Herstellung der Schweißnaht 9 ein die Wärmeleitfähigkeit der Schweißnaht 9 reduzierendes Material 12 in ein Schweißbad eingebracht werden.

Bei dem in das Schweißbad eingebrachten Material 12 kann es sich um einen Bestandteil einer Legierung eines Grundmaterials eines Bandkörpers 13 des Endlosbandes 1 handeln. Alternativ hierzu aber auch ein Material 12 gewählt werden, welches nicht Bestandteil des Grundmaterials des Bandkörpers 13 ist.

Nachfolgend angeführte Beispiele für mögliche Materialien für den Bandkörper 13 beziehen sich auf die Normbezeichnungen gemäß EN 10027 Blatt 1 und Blatt 2. Als Beispiele seien hier die Werkstoffe X10CrNi18-8 mit der Werkstoff-Nummer 1.4310, X5CrNi18-10 mit der Werkstoff-Nummer 1.4301, X5CrNiMo17-12-2 mit der Werkstoff -Nummer 1.4401, X3CrNiMo13-4 mit der Werkstoff-Nummer 1.4313, CrNiCuTi15-7 oder ähnliche Werkstoffe, Ck67 mit der Werkstoff-Nummer 1.1231,und Ti-II mit der Werkstoff-Nummer 3.7035, X1NiCrMoCu25-20-5. Der Werkstoff Ck 67 wird auch mit einer geschützten Werksbezeichnung "Ti 994-Ti-grade2" bezeichnet.

Bei den nachfolgend im Detail beschriebenen Werkstoffen für den Bandkörper 13 werden diese mit den einzelnen Legierungselementen zum jeweiligen Werkstoff ausgebildet. Die Angaben erfolgen in Tabelle 1 dabei in Gewichts-Prozent, sofern keine andere Einheit angegeben ist.

**Tabelle 1:**

| | X5CrNi18-10 (1.4301) | | X5CrNiMo17-12-2 (1.4401) | |
|---|---|---|---|---|
| | Sollmenge | Idealmenge | Sollmenge | Idealmenge |
| C (Kohlenstoff | 0,040 - 0,060 | | 0,040 - 0,060 | |
| Cr (Chrom) | 18,3 - 18,7 | | 17,0 - 17,4 | |
| Ni (Nickel) | 10,1 - 10,5 | | 10,5 - 10,9 | |
| Mo (Molybdän) | max. 0,35 | | 2,0 - 2,2 | |
| Mn (Mangan) | 1,2 - 1,8 | | 1,1 - 1,8 | |
| Si (Silizium) | 0,3 - 0,6 | | 0,3 - 0,6 | |
| Cu (Kupfer) | max. 0,25 | | max. 0,25 | |
| P (Phosphor) | max. 0,025 | | max. 0,025 | |
| S (Schwefel) | max. 0,005 | | max. 0,001 | |
| Al (Aluminium) | max. 0,01 | max. 0,005 | max. 0,01 | max. 0,005 |
| N (Stickstoff) | max. 0,02 | | max. 0,02 | |
| O (Sauerstoff) | max. 0,002 | | max. 0,003 | |
| V (Vanadium) | max. 0,07 | | max. 0,07 | |
| Pb (Blei) | max. 0,002 | | max. 0,002 | |
| Sn (Zinn) | max. 0,01 | | max. 0,01 | |
| Nb (Niob) | max. 0,01 | | max. 0,01 | |
| B (Bor) | max. 0,001 | | max. 0,001 | |
| Ta (Tantal) | max. 0,005 | | max. 0,005 | |
| Ti (Titan) | max. 0,01 | | max. 0,01 | |

Wird beispielsweise der Werkstoff X5CrNi18-10 (1.4301) oder der Werkstoff X5CrNiMo17-12-2 (1.4401) für den Bandkörper 13 verwendet so kann durch Hinzufügen von Cr oder Ni in das Schweißbad, die bereits in der Legierung des Grundmaterials des Bandkörpers 13 enthalten sind, die Wärmeleitfähigkeit der Schweißnaht 9 reduziert werden. Hierbei wird bevorzugt so viel Cr oder Ni in das Schweißbad beigemengt, dass der Gehalt an Cr oder Ni in der Schweißnaht 9 mindestens zwischen 5% - 20% höher ist als in dem Grundmaterial des Bandkörpers 13. Wird der Schweißnaht 9 Cr als Material 12 beigemengt, so kann der Cr Gehalt der Schweißnaht 9 gemäß obigen Beispielen je nach verwendeten Grundmaterial beispielsweise über 18% und unter 24% liegen.

Durch Beimengen von Co in das Schweißbad kann die Wärmeleitfähigkeit der Schweißnaht 9 in obigen Beispielen durch ein nicht in der Legierung des Grundmaterials des Bandkörpers 13 enthaltenes Element verringert werden. Die Menge an Co, die in diesem Fall der Schweißnaht 9 beigemengt wird, ist so bevorzugterweise bemessen, dass der Gehalt an Co in der Schweißnaht zwischen 5% und 20% liegt.

Durch das Beimengen des Materials 12 kann die Wärmeleitfähigkeit der Schweißnaht 9 der Wärmeleitfähigkeit eines unmittelbar an die Schweißnaht 9 angrenzenden Bereichs des Bandkörpers 13 angepasst werden.

Gemäß Fig. 2 kann die Wärmeleitfähigkeit in dem unmittelbar an die Schweißnaht 9 angrenzenden Bereich 14 des Endlosbandes 1 durch Veränderung einer Materialzusammensetzung in diesem Bereich erhöht werden. So kann auf dem Endlosband 1 in dem unmittelbar an die Schweißnaht 9 angrenzenden Bereich 14 eine Vertiefung 15 der Bandoberfläche gegenüber der Schweißnaht 9 erzeugt werden. Dies kann beispielsweise durch Abtragen von Material in dem Bereich 14 erfolgen. Die Vertiefung 15 kann mit einem Material 16 aufgefüllt werden, welches eine höhere Wärmeleitfähigkeit als die Schweißnaht 9 aufweist. Auf diese Weise lässt sich die Wärmeleitfähigkeit des Bereichs 14 erhöhen und somit der Wärmeleitfähigkeit der Schweißnaht 9 annähern. Als Material 16 kann beispielsweise Cu verwendet werden. Zum Aufbringen des Materials 16 kann ein galvanisches Verfahren, beispielsweise Tampongalvanisieren, verwendet werden.

Wie in Fig. 4 dargestellt, kann der an die Schweißnaht 9 angrenzende Bereich 14 durch Aufbringen weiterer Schweißnähte 17, 18, 19 umgeformt werden. Hierbei werden die weiteren Schweißnähte 17, 18, 19 über und neben der Schweißnaht 9 aufgebracht, wobei sich unmittelbar benachbarte Schweißnähte 17, 18, 19 zumindest teilweise überlappen. Da die Schweißnähte 17, 18, 19 eine höhere Wärmeleitfähigkeit aufweisen als das Grundmaterial des Bandkörpers 13 wird durch die Anordnung der zusätzlichen Schweißnähte 17, 18, 19 die Wärmeleitfähigkeit in dem Bereich 14 erhöht, sodass eine Differenz zwischen der Wärmeleitfähigkeit des Bereichs 14 und der Wärmeleitfähigkeit der Schweißnaht 9 verringert wird.

Gemäß Fig. 5 kann eine Dicke der zumindest einen Schweißnaht 9 in Richtung einer Dicke des Bandkörpers 13 des Endlosbandes 1 betrachtet durch Abtragen von Material reduziert werden. Eine durch das Abtragen entstandene Vertiefung 21 kann mit einem Material 20 aufgefüllt werden, welches eine niedrigere Wärmeleitfähigkeit als die Schweißnaht 9 aufweist. Als Material 20 kann beispielsweise ein Kunststoff, insbesondere Teflon zum Einsatz kommen.

Für alle oben genannten Ausführungsbeispiele gilt, dass das Endlosband 1 nach Herstellung der Schweißnähte 7, 9 nachbearbeitet, beispielsweise poliert, insbesondere hochglanzpoliert, werden kann. Auch können die Schweißnähte 7, 9 für sich genommen noch nachbearbeitet, beispielsweise geschliffen und/oder poliert, werden. Auch kann eine Dickenanpassung des Endlosbandes 1 durchgeführt werden, sodass dieses über seine ganze Umfangslänge hinweg im Wesentlichen eine konstante Dicke aufweist.

Der Vollständigkeit halber sei darauf hingewiesen, dass jedes der oben genannten und in den Figuren 1 bis 5 dargestellten Ausführungsbeispiele mit jedem anderen oder mehreren dieser Ausführungsbeispiele kombiniert werden kann. So kann beispielsweise die in Fig. 1 dargestellte Schweißnaht 9 zusätzlich noch mit dem Aufbringen weiterer Schweißnähte 17, 18, 19 oder dem in Fig. 5 dargestellten Einbringen eines zusätzlichen Materials 20 kombiniert werden. Die Kombination der dargestellten und beschriebenen Verfahren ist hinsichtlich einer besonders exakten Beeinflussung der Wärmeleitfähigkeit in der Schweißnaht 9 und/oder in dem Bereich 14 von Vorteil.

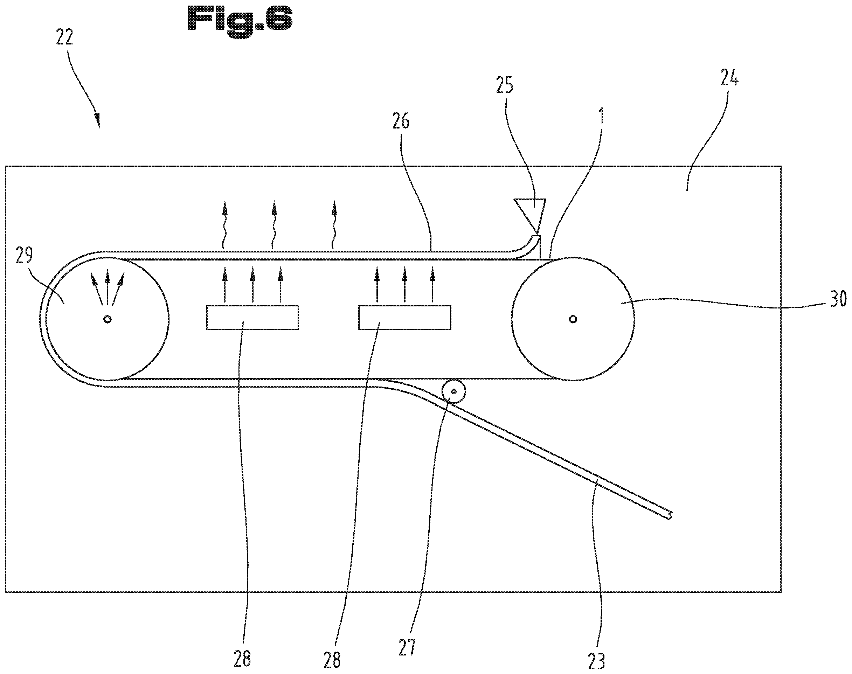

Gemäß Fig. 6 weist eine erfindungsgemäße Vorrichtung 22 zur Herstellung eines Films 23 oder einer Folie einen Gießbereich 24 auf. Bei diesem Film 23 kann es sich um einen lösungsmittelbasierten Film handeln, wie beispielsweise sogenannte TAC-Filme, PVOH-Filme etc. Als Lösungsmittel können beispielsweise im Fall von TAC -Filmen Dichlormethan (Methylenchlorid) oder im Fall von PVOH-Filmen Wasser verwendet werden.

Der Gießbereich 24, der im Stand der Technik auch als Gießkammer ("casting chamber") bezeichnet wird, kann beispielsweise mit einer Verkleidung aus Blech eingehaust sein. Weiters sind in dem Gießbereich 24 ein Endlosband 1 und zumindest eine Gießvorrichtung 25 zum Aufbringen eines Materials 26 auf das Endlosband 1 angeordnet. Das Endlosband 1 läuft zwischen zwei Rollen 29 und 30 um. Eine dieser Rollen 29, 30 kann angetrieben sein und als Antriebsrolle für das Endlosband 1 dienen.

Das Aufbringen des Materials 26 auf das Endlosband 1 kann durch Aufgießen, beispielsweise mittels Curtain Coating, Extrudieren, Aufsprühen etc. erfolgen. Das aufgegossene Material 26 bildet auf dem Endlosband 1 eine filmförmige Schicht und durchläuft auf dem Endlosband 1 einen Prozess, der zu einer zumindest teilweisen Trocknung und/oder Aushärtung des Materials 26 führt. Zum Abziehen des (teilweise) getrockneten Films 23 von dem Endlosband 1 kann eine Abziehvorrichtung 27, beispielsweise in Form einer Rolle, vorgesehen sein.

Um eine hohe Produktionsgeschwindigkeit zu erzielen, wird der Film 23 meist in einem noch nicht vollständig getrockneten, "feuchten" Zustand von dem Band abgezogen. Der Begriff "feucht" bezieht sich bei lösungsmittelbasierten Filmen auf den noch im Film 23 enthaltenen Lösungsmittelanteil. So wäre beispielsweise bei einem vollständig getrockneten Film der Lösungsmittelanteil Null.

Zum teilweisen Trocknen des Materials 26 bzw. des Films 23 können Heizvorrichtungen 28 vorgesehen sein, welche eine, einer das Material 26 bzw. den Film 23 tragenden Produktseite gegenüberliegende Innenseite des Endlosbandes 1 beheizen. Die Heizvorrichtungen 28 können beispielsweise Düsenkästen umfassen, durch welche heiße Luft in Richtung der Innenseite des Endlosbandes 1 ausgestoßen wird.

Zusätzlich zu den Heizvorrichtungen 28 können eine oder beide der Rollen 29, 30 beheizt sein.

Durch die Verwendung des erfindungsgemäßen Endlosbandes 1 lässt sich sehr gut die Sichtbarkeit von Schweißnähten des Endlosbandes 1 in dem Film 23 vermeiden.

Der Ordnung halber sei abschließend darauf hingewiesen, dass zum besseren Verständnis des Aufbaus des Endlosbandes dieses bzw. dessen Bestandteile teilweise unmaßstäblich und/oder vergrößert und/oder verkleinert dargestellt wurden.

### Bezugszeichenaufstellung

- 1: Endlosband
- 2: Gesamtbreite
- 3: Bandabschnitt
- 4: Bandabschnitt
- 5: Stirnende
- 6: Stirnende
- 7: Schweißnaht
- 8: Längsseitenkante
- 9: Schweißnaht
- 10: Längsseitenkante
- 11: Abstand Stirnende
- 12: Material
- 13: Bandkörper
- 14: Bereich
- 15: Vertiefung
- 16: Material
- 17: Schweißnaht
- 18: Schweißnaht
- 19: Schweißnaht
- 20: Material
- 21: Vertiefung
- 22: Vorrichtung
- 23: Film
- 24: Gießbereich
- 25: Gießvorrichtung
- 26: Material
- 27: Abziehvorrichtung
- 28: Heizvorrichtung
- 29: Rolle
- 30: Rolle

## Patentansprüche

1. Verfahren zur Herstellung eines Endlosbandes (1), welches zumindest eine Schweißnaht (7, 9) aufweist, **dadurch gekennzeichnet, dass** zumindest ein die Wärmeleitfähigkeit der Schweißnaht (7, 9) reduzierendes Material (12) in die Schweißnaht (9) eingebracht wird, wobei das in die Schweißnaht (9) eingebrachte Material (12) ausgewählt ist aus der Gruppe Cr, Ni, Co, oder dass die Wärmeleitfähigkeit zumindest in einem unmittelbar an die Schweißnaht (7, 9) angrenzenden Bereich (14) des Endlosbandes (1) durch Veränderung einer Materialzusammensetzung und/oder eine Gefügestruktur des Endlosbandes (1) in diesem Bereich (14) erhöht wird, wobei auf dem Endlosband (1) in dem unmittelbar an die Schweißnaht (9) angrenzenden Bereich (14) eine Vertiefung (15) einer Bandoberfläche gegenüber der Schweißnaht (9) erzeugt wird, wobei die Vertiefung (15) mit einem Material (16) aufgefüllt wird, welches eine höhere Wärmeleitfähigkeit als die Schweißnaht (9) aufweist.

2. Verfahren nach Anspruch 1, **dadurch gekennzeichnet, dass** das in die Schweißnaht (9) eingebrachte Material (12) Bestandteil einer Legierung eines Grundmaterials eines Bandkörpers (13) des Endlosbandes (1) ist.

3. Verfahren nach Anspruch 1, **dadurch gekennzeichnet, dass** das in die Schweißnaht (9) eingebrachte Material (12) nicht Bestandteil einer Legierung eines Grundmaterials eines Bandkörpers (13) des Endlosbandes (1) ist.

4. Verfahren nach Anspruch 1, **dadurch gekennzeichnet, dass** das Material (16) mittels eines galvanischen Verfahrens aufgebracht wird.

5. Verfahren nach einem der Ansprüche 1 bis 4, **dadurch gekennzeichnet, dass** der an die Schweißnaht (9) angrenzende Bereich (14) durch Aufbringen weiterer Schweißnähte (17, 18, 19) umgeformt wird, wobei unmittelbar benachbarte Schweißnähte (17, 18, 19) einander zumindest teilweise überlappen.

6. Verfahren nach Anspruch 5, **dadurch gekennzeichnet, dass** eine Eidringtiefe der weiteren Schweißnähte (17, 18, 19) in das Grundmaterial des Bandkörpers (13) des Endlosbandes (1) mit zunehmender Entfernung der weiteren Schweißnähte (17, 18, 19 von der zumindest einen Schweißnaht (9) abnimmt.

7. Verfahren nach einem der Ansprüche 1 bis 6, **dadurch gekennzeichnet, dass** eine Dicke der zumindest einen Schweißnaht (9) in Richtung einer Dicke des Bandkörpers (13) des Endlosbandes (1) betrachtet durch Abtragen von Material reduziert wird und eine durch das Abtragen entstandene Vertiefung (21) mit einem Material (20) aufgefüllt wird, welches eine niedrigere Wärmeleitfähigkeit als die Schweißnaht (9) aufweist.

## Claims

1. A method for producing an endless belt (1), which comprises at least one weld seam (7, 9), **characterized in that** at least one material (12) that reduces the thermal conductivity of the weld seam (7, 9) is introduced into the weld seam (9), wherein the material (12) introduced into the weld seam (9) is selected from the group Cr, Ni, Co, or that the thermal conductivity is increased in at least one area (14) of the endless belt (1) directly adjacent to the weld seam (7, 9) by changing a material composition and/or a material structure of the endless belt (1) in this area (14), wherein a depression (15) in a belt surface relative to the weld seam (9) is generated on the endless belt (1) in the area (14) directly adjacent to the weld seam (9), wherein the depression (15) is filled with a material (16) having a higher thermal conductivity than the weld seam (9).

2. The method according to claim 1, **characterized in that** the material (12) introduced into the weld seam (9) is part of an alloy of a base material of a belt body (13) of the endless belt (1).

3. The method according to claim 1, **characterized in that** the material (12) introduced into the weld seam (9) is not part of an alloy of a base material of a belt body (13) of the endless belt (1).

4. The method according to claim 1, **characterized in that** the material (16) is applied by means of a galvanic process.

5. The method according to one of claims 1 to 4, **characterized in that** the area (14) adjacent to the weld seam (9) is shaped by applying additional weld seams (17, 18, 19), wherein directly adjacent weld seams (17, 18, 19) at least partially overlap each other.

6. The method according to claim 5, **characterized in that** a penetration depth of the additional weld seams (17, 18, 19) into the base material of the belt body (13) of the endless belt (1) decreases as the distance between the additional weld seams (17, 18, 19) and the at least one weld seam (9) increases.

7. The method according to one of claims 1 to 6, **characterized in that** a thickness of the at least one weld seam (9) viewed in the direction of a thickness of the belt body (13) of the endless belt (1) is reduced by removing material, and a depression (21) produced by the removal is filled with a material (20) having a lower thermal conductivity than the weld seam (9).

## Revendications

1. Procédé de fabrication d'une bande sans fin (1), qui comprend au moins un cordon de soudure (7, 9), **caractérisé en ce qu'**au moins un matériau (12) réduisant la conductivité thermique du cordon de soudure (7, 9) est introduit dans le cordon de soudure (9), le matériau (12) introduit dans le cordon de soudure (9) étant sélectionné dans le groupe constitué de Cr, Ni, Co ou **en ce que** la conductivité thermique est augmentée au moins dans une zone (14), directement adjacente au cordon de soudure (7, 9), de la bande sans fin (1) par modification d'une composition du matériau et/ou d'une structure de la bande sans fin (1) dans cette zone (14), un creux (15) d'une surface de bande par rapport au cordon de soudure (9) étant réalisé sur la bande sans fin (1) dans la zone(14) directement adjacente au cordon de soudure (9), le creux (15) étant rempli d'un matériau (16) qui présente une conductivité thermique supérieure à celle du cordon de soudure (9).

2. Procédé selon la revendication 1, **caractérisé en ce que** le matériau (12) introduit dans le cordon de soudure (9) fait partie d'un alliage d'un matériau de base d'un corps de bande (13) de la bande sans fin (1).

3. Procédé selon la revendication 1, **caractérisé en ce que** le matériau (12) introduit dans le cordon de soudure (9) ne fait pas partie d'un alliage d'un matériau de base d'un corps de bande (13) de la bande sans fin (1).

4. Procédé selon la revendication 1, **caractérisé en ce que** le matériau (16) est appliqué au moyen d'un procédé galvanique.

5. Procédé selon l'une des revendications 1 à 4, **caractérisé en ce que** la zone (14) adjacente au cordon de soudure (9) est formée par l'application de cordons de soudure (17, 18, 19) supplémentaires, les cordons de soudure (17, 18, 19) immédiatement adjacents se superposant au moins partiellement entre eux.

6. Procédé selon la revendication 5, **caractérisé en ce qu'**une profondeur de pénétration des cordons de soudure (17, 18, 19) supplémentaires dans le matériau de base du corps de bande (13) de la bande sans fin (1) diminue lorsque la distance des cordons de soudure (17, 18, 19) supplémentaires par rapport à l'au moins un cordon de soudure (9) augmente.

7. Procédé selon l'une des revendications 1 à 6, **caractérisé en ce qu'**une épaisseur de l'au moins un cordon de soudure (9) est réduite, vue dans la direction d'une épaisseur du corps de bande (13) de la bande sans fin (1), par l'enlèvement de matériau et un creux (21) produit par cet enlèvement est rempli d'un matériau (20) qui présente une conductivité thermique inférieure à celle du cordon de soudure (9).
